(19) Europäisches Patentamt
European Patent Office
Office européen des brevets

(11) EP 3 848 209 B1

(12) # EUROPEAN PATENT SPECIFICATION

(45) Date of publication and mention of the grant of the patent:
**01.11.2023 Bulletin 2023/44**

(21) Application number: **19864813.1**

(22) Date of filing: **05.09.2019**

(51) International Patent Classification (IPC):
***B60C 11/00*** *(2006.01)* ***B60C 1/00*** *(2006.01)*
***B60C 19/00*** *(2006.01)* ***C08K 5/18*** *(2006.01)*
***C08L 21/00*** *(2006.01)*

(52) Cooperative Patent Classification (CPC):
(C-Sets available)
**B60C 1/0016;** B60C 2011/0016 (Cont.)

(86) International application number:
**PCT/JP2019/034993**

(87) International publication number:
**WO 2020/066527 (02.04.2020 Gazette 2020/14)**

(54) **TIRE AND METHOD OF EVALUATING TIRE GRIP PERFORMANCE**

REIFEN UND VERFAHREN ZUR BEWERTUNG DER HAFTLEISTUNG EINES REIFENS

PNEU ET PROCÉDÉ D’ÉVALUATION DE LA PERFORMANCE D’ADHÉRENCE D’UN PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2018 JP 2018182770**

(43) Date of publication of application:
**14.07.2021 Bulletin 2021/28**

(73) Proprietor: **Sumitomo Rubber Industries, Ltd.**
**Kobe-shi, Hyogo 651-0072 (JP)**

(72) Inventors:
- **MATSUNAGA, Takanobu**
**Kobe-shi, Hyogo 651-0072 (JP)**
- **KOMORI, Yoshihiko**
**Kobe-shi, Hyogo 651-0072 (JP)**
- **MIYAZAKI, Tatsuya**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 2 949 695** **EP-A1- 3 281 978**
**EP-A1- 3 300 923** **WO-A1-2013/046845**
**WO-A1-2015/104955** **JP-A- 2013 177 113**
**JP-A- 2015 000 971** **JP-A- 2015 013 956**
**JP-A- 2015 013 975** **JP-A- 2015 196 825**
**JP-A- 2015 232 110** **JP-A- 2015 232 114**
**JP-A- 2016 199 755** **JP-A- 2018 002 904**
**JP-A- 2018 095 701**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 848 209 B1

(52) Cooperative Patent Classification (CPC): (Cont.)

C-Sets

**C08L 9/06, C08L 9/06, C08L 9/00, C08L 45/02, C08L 25/16, C08L 91/02, C08L 45/00, C08K 3/04, C08K 3/36, C08K 5/548, C08K 5/09, C08K 3/22, C08K 3/06, C08K 5/31, C08K 5/47, C08K 5/18;**
**C08L 9/06, C08L 9/06, C08L 9/00, C08L 47/00, C08L 25/16, C08L 71/02, C08L 91/02, C08L 45/00, C08K 3/04, C08K 3/36, C08K 5/548, C08K 5/09, C08K 3/22, C08K 3/06, C08K 5/31, C08K 5/47, C08K 5/18;**
**C08L 9/06, C08L 9/06, C08L 9/00, C08L 47/00, C08L 25/16, C08L 91/02, C08L 45/00, C08K 3/04, C08K 3/36, C08K 5/548, C08K 5/09, C08K 3/22, C08K 3/06, C08K 5/31, C08K 5/47, C08K 5/18, C08K 5/098, C08K 5/20;**
**C08L 9/06, C08L 9/06, C08L 9/00, C08L 91/00, C08L 25/16, C08L 91/02, C08L 45/00, C08K 3/04, C08K 3/36, C08K 5/548, C08K 5/09, C08K 3/22, C08K 3/06, C08K 5/31, C08K 5/47, C08K 5/18**

## Description

TECHNICAL FIELD

The present invention relates to tires and methods for evaluating tire grip performance.

BACKGROUND ART

Good wet grip performance is desired as an important property of tires. It is generally known to improve wet grip performance by increasing the hysteresis loss of a tire tread rubber. For this purpose, it is well known to increase the tan δ peak temperature (Tg) of the temperature dependence curve of the rubber (see, for example, Patent Literature 1). It is also known to incorporate a resin to improve wet grip performance.

CITATION LIST

PATENT LITERATURE

Patent Literature 1: JP 2006-056979 A

SUMMARY OF INVENTION

TECHNICAL PROBLEM

However, the studies of the present inventors have revealed that, even when the technique of increasing the tan δ peak temperature or incorporating a resin is employed, the resulting new tires may exhibit insufficient grip performance before running-in (running-in period).

The present invention aims to solve this problem and provide tires which exhibit satisfactory grip performance both before and after running-in (running-in period).

SOLUTION TO PROBLEM

The present inventors have extensively studied the new problem discovered by the inventors, and found that satisfactory grip performance can be exhibited both before and after running-in by adjusting the Martens hardnesses of a specific part of a tread rubber to have a specific relationship. This finding has led to the completion of the present invention.

Specifically, the present invention relates to tires, including a tread rubber, the tread rubber satisfying the following relationship (I):

$$(a)/(b) \geq 0.75 \quad (I)$$

wherein the symbols (a) and (b) represent minimum and maximum Martens hardnesses, respectively, of a tire tread contact portion measured in a region from 10 um to 200 um deep in a tire radial direction from a tire surface.

The tread rubber is formed from a rubber composition which comprises, per 100 parts by mass of a rubber component therein, 3.4 parts by mass or more of at least one phenylenediamine antioxidant, and the tread rubber is formed from a rubber composition which comprises, per 100 parts by mass of a rubber component therein, 20 parts by mass or more of at least one liquid plasticizer.

The minimum Martens hardness (a) is preferably 0.35 mgf/μ$m^2$ or less.

The maximum Martens hardness (b) is preferably 0.05 mgf/μ$m^2$ or more.

The tread rubber is preferably formed from a rubber composition which contains, per 100 parts by mass of a rubber component therein, 0.1 parts by mass or more of at least one amide compound or at least one nonionic surfactant having an SP value of 9.0 or higher.

The present invention also relates to methods for evaluating tire grip performance, the methods including:

preparing a specimen cut out of a tire tread rubber, the specimen having a ground contact face that formed a tire tread contact portion, and a measurement face that is perpendicular to the ground contact face and extends in a tire radial direction; and

measuring a Martens hardness of the measurement face of the specimen prepared in the specimen preparation

step along the tire radial direction using a microhardness tester or a thin film hardness tester.

The measurement step preferably includes measuring the Martens hardness in a region of the measurement face corresponding to 10 um to 200 um deep in the tire radial direction from a tire surface.

The methods preferably include, before measuring the Martens hardness, removing a surface of the measurement face of the specimen prepared in the specimen preparation step to a depth of 20 um or more to form a new measurement face, and measuring the Martens hardness of the new measurement face.

ADVANTAGEOUS EFFECTS OF INVENTION

The tires according to the first aspect of the present invention include a tread rubber satisfying relationship (I). Such tires can exhibit satisfactory grip performance both before and after running-in.

The methods for evaluating tire grip performance according to the second aspect of the present invention include preparing a specimen cut out of a tire tread rubber, wherein the specimen has a ground contact face that formed a tire tread contact portion, and a measurement face that is perpendicular to the ground contact face and extends in the tire radial direction; and measuring the Martens hardness of the measurement face of the specimen prepared in the specimen preparation step along the tire radial direction using a microhardness tester or a thin film hardness tester. Tire grip performance can be evaluated by such methods.

BRIEF DESCRIPTION OF DRAWINGS

Fig. 1 shows an exemplary Martens hardness distribution of a tread rubber.
Fig. 2 shows a cross-sectional view of a part of a tire according to one embodiment of the present invention.
Fig. 3 shows a cross-sectional view of a part of a tire according to one embodiment of the present invention.
Figs. 4 (a), (b), and(c) each show a schematic view illustrating a specimen.

DESCRIPTION OF EMBODIMENTS

(First Aspect of Invention)

The tires according to the first aspect of the invention include a tread rubber which satisfies the following relationship (I):

$$(a)/(b) \geq 0.75 \quad (I)$$

wherein the symbols (a) and (b) represent the minimum and maximum Martens hardnesses, respectively, of a tire tread contact portion measured in a region from 10 um to 200 um deep in the tire radial direction from the tire surface. Thus, the tires can exhibit satisfactory grip performance both before and after running-in.

Hereinafter, the minimum Martens hardness (a) is also referred to simply as "Martens hardness (a)", the maximum Martens hardness (b) is also referred to simply as "Martens hardness (b)", and both hardnesses are also collectively referred to as "Martens hardnesses (a) and (b)".

The tires provide the above-mentioned effect. The reason for this advantageous effect is not exactly clear, but may be explained as follows.

Studies by the inventors have shown that, in order to obtain good grip performance, it is ideal that a tread rubber be rigid on the inside and soft on the outside.

Specifically, the inner part of a tread is preferably hard from the standpoints of preventing deformation of the rubber to allow the rubber to maintain a large actual contact area with the road surface and of ensuring cornering power for handling stability.

On the other hand, the surface part of the tread is preferably soft from the standpoint of allowing the rubber to conform to the micro irregularities (80 um to 0.1 mm) of stone aggregates (8 mm pitch) on the road surface. Such conformity will lead to an increased actual contact area between the rubber and the road surface, resulting in a higher hysteresis loss and thus good grip.

Based on the above idea, the inventors investigated why new tires may exhibit insufficient grip performance before running-in.

As a result, it has been found that at a depth of 0 to 100 um from the tread surface where a polymer layer rich

in plasticizers is formed, the tread is soft immediately after vulcanization, namely immediately after manufacture of the tire; however, it can be easily hardened during storage of the tire due to penetration of oxygen, particularly when it has a low crosslink density or a low antioxidant content. In other words, it has been found that the surface layer of the tread hardens during the period between manufacture and use of the tire, thereby resulting in reduced grip performance before running-in.

Through extensive research on this phenomenon, the present inventors have found that although tires are usually used several months to about a year after they are manufactured, the storage for several months to about a year in a warehouse or the like allows the surface layer to harden while at the same time the additives such as antioxidants, plasticizers, and waxes migrate to the surface layer to soften the surface layer or inhibit it from hardening. Specifically, phenylenediamine antioxidants may migrate and bleed to the surface layer to inhibit it from hardening due to oxygen, ozone, or ultraviolet rays. Moreover, liquid plasticizers, amide compounds, and nonionic surfactants may migrate and bleed to the surface layer to soften the surface layer and also to uniformly distribute the phenylenediamine antioxidants in the surface layer so that its hardening can be more suitably inhibited. Moreover, the liquid plasticizers may serve as carriers of the antioxidants to promote the migration of the antioxidants to the surface layer. Additionally, the amide compounds and nonionic surfactants may also serve to soften the bleed layer on the outermost surface. Here, additives with a larger SP value difference from the rubber component are more likely to bleed.

Moreover, the liquid plasticizers and nonionic surfactants themselves do not provide grip, but function to improve the dispersibility of the resins in the rubber and to plasticize the resin bleed or film.

Then, in the tread rubber of the tire stored for several months to about a year in a warehouse, migration of the compounding additives to the surface layer and hardening of the surface layer have progressed so that hardening due to oxygen, ozone, or UV degradation can be significant at a position between 10 and 200 um deep in the tire radial direction from the tire surface, as shown in Fig. 1. Thus, significant differences may occur between the tires.

With regard to the minimum and maximum Martens hardnesses which occur at any position between 10 and 200 um, satisfying relationship (I) means a small difference between the minimum and maximum Martens hardnesses in a region from 10 um to 200 um deep in the tire radial direction from the tire surface. In other words, the satisfaction of relationship (I) means that local hardening is inhibited in a region from 10 um to 200 um deep in the tire radial direction from the tire surface. Thus, it has been found that by satisfying relationship (I) so that local hardening can be inhibited in a region from 10 um to 200 um, it is possible to conform to the micro irregularities on the road surface to increase the actual contact area, thus making grip performance before running-in closer to grip performance after running-in so that satisfactory grip performance can be exhibited both before and after running-in.

This is believed to be because the satisfaction of relationship (I) makes it possible to conform to the micro irregularities on the road surface to increase the actual contact area, thus making grip performance before running-in closer to grip performance after running-in so that good grip performance can be exhibited before running-in; additionally, it also makes it possible to reduce deformation of the rubber blocks to reduce lifting of the block edges, so that good grip performance can be exhibited after running-in. Thus, satisfactory grip performance can be exhibited both before and after running-in.

For the above reason, tires including a tread rubber satisfying relationship (I) can exhibit satisfactory grip performance both before and after running-in. Accordingly, the present invention solves the problem (purpose) consisting in providing satisfactory grip performance both before and after running-in by a tire structure including a tread rubber satisfying the parameter of relationship (I). In other words, this parameter does not define the problem (purpose), and the problem herein is to provide satisfactory grip performance both before and after running-in. In order to provide a solution to this problem, a tread rubber structure satisfying the parameter of relationship (I) has been devised. Thus, the essential feature is to satisfy the parameter of relationship (I).

The tires according to the first aspect of the invention include a tread rubber, the tread rubber satisfying the following relationship (I):

$$(a)/(b) \geq 0.75 \quad (I)$$

wherein the symbols (a) and (b) represent the minimum and maximum Martens hardnesses, respectively, of a tire tread contact portion measured in a region from 10 um to 200 um deep in the tire radial direction from the tire surface.

Herein, the term "tire tread contact portion" refers to a tread part which will come into contact with the road surface. In a tire 2 shown in Fig. 2, the tire tread contact portion means a tread face 20 of a tread 4 and does not correspond to a groove 22 which will not come into contact with the road surface.

The tires according to the first aspect of the invention include a tread rubber which satisfies relationship (I) wherein the symbols (a) and (b) represent the minimum and maximum Martens hardnesses, respectively, of a tire tread contact portion measured in a region from 10 um (the position "a" in Fig. 3) to 200 um (the position "b" in Fig. 3) deep in the tire radial direction from the tire surface (i.e., from position a to position b in Fig. 3) .

The lower limit of relationship (I) is preferably 0.75, more preferably 0.76, still more preferably 0.78, particularly preferably 0.79, most preferably 0.80, further preferably 0.83, further preferably 0.85, further preferably 0.90, further preferably 0.92, further preferably 0.93, further preferably 0.94. The upper limit of relationship (I) is not limited but is preferably 1.00. When the value is within the range indicated above, the advantageous effect can be more suitably achieved.

The minimum Martens hardness (a) is not limited as long as it satisfies relationship (I). The lower limit of the minimum Martens hardness (a) is not limited, but is preferably 0.05 mgf/$\mu m^2$ or more, more preferably 0.10 mgf/$\mu m^2$ or more, still more preferably 0.12 mgf/$\mu m^2$ or more, while the minimum Martens hardness (a) is preferably 0.35 mgf/$\mu m^2$ or less, more preferably 0.30 mgf/$\mu m^2$ or less, still more preferably 0.25 mgf/$\mu m^2$ or less. When the value is within the range indicated above, the advantageous effect can be more suitably achieved.

The maximum Martens hardness (b) is not limited as long as it satisfies relationship (I).

Minimum Martens hardness (a) and maximum Martens hardness (b) roughly correlate with Shore (A) Hs (Shore A hardness) used in the field of tire technology, which is the macrohardness measured at an indentation depth of several millimeters. Generally, an Hs of 60 to 75 corresponds to a maximum Martens hardness (b) of 0.10 to 0.30. The maximum Martens hardness (b) is preferably 0.05 mgf/$\mu m^2$ or more, more preferably 0.10 mgf/$\mu m^2$ or more, still more preferably 0.13 mgf/$\mu m^2$ or more. The upper limit is not limited but is preferably 0.50 mgf/$\mu m^2$ or less, more preferably 0.45 mgf/$\mu m^2$ or less, still more preferably 0.40 mgf/$\mu m^2$ or less, particularly preferably 0.35 mgf/$\mu m^2$ or less, most preferably 0.30 mgf/$\mu m^2$ or less, further most preferably 0.25 mgf/$\mu m^2$ or less. When the value is within the range indicated above, the advantageous effect can be more suitably achieved.

Herein, the Martens hardnesses (a) and (b) are determined by the measurement method described later in

EXAMPLES.

The Martens hardnesses (a) and (b) may be controlled by varying the types or amounts of the chemicals (in particular, phenylenediamine antioxidants, liquid plasticizers, amide compounds, or nonionic surfactants having an SP value of 9.0 or higher) to be incorporated in the rubber composition for forming a tread rubber (hereinafter, also referred to as "tread rubber composition"), specifically as indicated in Table 1.

In the table, the symbol ↓ means "reduced", the symbol ↑ means "increased", and the symbol → means "not affected". Here, a variation of 0.1 or less is also regarded as "not affected".

[Table 1]

| Change with increase in chemical content | | |
|---|---|---|
| Chemical | Martens hardness (a) | Martens hardness (b) |
| Liquid plasticizers | ↓ | ↓ |
| Grip resins (solid resins) | ↑ | ↑ |
| Phenylenediamine antioxidants | → | ↓ |
| Amide compounds or nonionic surfactants having SP value of 9.0 or higher | → | ↓ |
| Silica, Carbon black | ↑ | ↑ |
| High molecular weight polymers | ↑ | ↑ |
| Vulcanizing agents | ↑ | ↑ |
| Silica + Liquid plasticizers | → | ↓ |
| Preferred direction | ↑ | ↓ |

If the hardness (Shore (A) hardness) changes by 2 or more with an increase in the chemical content, the amount of oils or the like incorporated may need to be controlled.

More specifically, the specified ratio (a)/(b) and Martens hardnesses (a) and (b) may be imparted to the rubber composition for forming a tread rubber, for example, by appropriately selecting the chemicals (in particular, phenylenediamine antioxidants, liquid plasticizers, amide compounds, or nonionic surfactants having an SP value of 9.0 or higher) to be incorporated in the rubber composition, or appropriately controlling the amounts of the chemicals. Specifically, the specified ratio (a)/(b) and Martens hardnesses (a) and (b) may be imparted by: (1) adjusting the amount of phenylenediamine antioxidants to 2.1 parts by mass or more per 100 parts by mass of the rubber component; (2) adjusting the

amount of liquid plasticizers to 20 parts by mass or more per 100 parts by mass of the rubber component; and/or (3) adjusting the amount of amide compounds or nonionic surfactants having an SP value of 9.0 or higher to 0.1 parts by mass or more per 100 parts by mass of the rubber component. Particularly, the techniques (1) and (2), especially (2), are important. Moreover, the technique (3) is also important because the additives have a large effect for their amount.

Moreover, a combination of the techniques (1) and (2), a combination of the techniques (1) and (3), and a combination of the techniques (1), (2), and (3) are suitable as well.

Other techniques for controlling the ratio (a)/(b) and the Martens hardnesses (a) and (b) include appropriately controlling silica, carbon black, high molecular weight polymers (SBR, BR), rare earth-catalyzed BR (high-cis BR), or vulcanizing agents, although then the hardnesses (a) and (b) tend to change in the same direction.

A tire including a tread rubber that satisfies the specified ratio (a)/(b) and Martens hardnesses (a) and (b) can be produced by preparing a tread rubber composition according to the above-mentioned techniques, and preparing a tire including a tread formed from the rubber composition.

More specifically, a tire including a tread rubber that satisfies the specified ratio (a)/(b) and Martens hardnesses (a) and (b) can be produced by: preparing a tread rubber composition according to the above techniques; preparing a tire including a tread formed from the rubber composition; and storing the tire in a warehouse or the like until use, during which migration of the compounding additives to the surface layer and hardening of the surface layer progress within the tread rubber.

Chemicals which may be used in the rubber composition (rubber composition for forming a tread rubber) are described below.

Examples of rubber components which may be used in the rubber composition include diene rubbers such as isoprene-based rubbers, polybutadiene rubber (BR), styrene-butadiene rubber (SBR), styrene-isoprene-butadiene rubber (SIBR), acrylonitrile-butadiene rubber (NBR), chloroprene rubber (CR), and butyl rubber (IIR). The rubber component may consist of a single rubber or a combination of two or more rubbers. Among these, SBR, BR, and isoprene-based rubbers are preferred, with SBR and/or BR being more preferred.

Any SBR may be used, and examples include those commonly used in the tire industry such as emulsion-polymerized SBR (E-SBR) and solution-polymerized SBR (S-SBR). These may be used alone or in combinations of two or more.

The rubber component preferably has a weight average molecular weight (Mw) of 150,000 or more, more preferably 350,000 or more. The upper limit of the Mw is not limited, but is preferably 4,000,000 or less, more preferably 3,000,000 or less.

The styrene content of the SBR is preferably 5% by mass or higher, more preferably 10% by mass or higher, still more preferably 15% by mass or higher, but is preferably 50% by mass or lower, more preferably 40% by mass or lower, still more preferably 35% by mass or lower. When the styrene content is within the range indicated above, the advantageous effect tends to be more suitably achieved.

The vinyl content of the SBR is preferably 10% by mass or higher, more preferably 15% by mass or higher, but is preferably 50% by mass or lower, more preferably 40% by mass or lower. When the vinyl content is within the range indicated above, the advantageous effect tends to be more suitably achieved.

The SBR may be either unmodified or modified SBR.

The modified SBR may be any SBR having a functional group interactive with a filler such as silica. For example, it may be a chain end-modified SBR obtained by modifying at least one chain end of SBR with a compound (modifier) having the functional group (i.e., a chain end-modified SBR terminated with the functional group); a backbone-modified SBR having the functional group in the backbone; a backbone- and chain end-modified SBR having the functional group in both the backbone and chain end (e.g., a backbone- and chain end-modified SBR in which the backbone has the functional group and at least one chain end is modified with the modifier); or a chain end-modified SBR that has been modified (coupled) with a polyfunctional compound having two or more epoxy groups in the molecule so that a hydroxy or epoxy group is introduced. These may be used alone or in combinations of two or more.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. Preferred among these are amino groups (preferably amino groups whose hydrogen atom is replaced with a C1-C6 alkyl group), alkoxy groups (preferably C1-C6 alkoxy groups), alkoxysilyl groups (preferably C1-C6 alkoxysilyl groups), and amide groups.

SBR products manufactured or sold by Sumitomo Chemical Co., Ltd., JSR Corporation, Asahi Kasei Corporation, Zeon Corporation, etc. may be used as the SBR.

The amount of SBR based on 100% by mass of the rubber component is preferably 40% by mass or more, more preferably 50% by mass or more, still more preferably 70% by mass or more, but is preferably 95% by mass or less, more preferably 90% by mass or less. When the amount is within the range indicated above, the advantageous effect tends to be better achieved.

Any BR, including those commonly used in the tire industry, may be used. Examples include those commonly used in the tire industry, such as high-cis BR, BR containing 1,2-syndiotactic polybutadiene crystals (SPB-containing BR), polybutadiene rubbers synthesized using rare earth catalysts (rare earth-catalyzed BR), and tin-modified polybutadiene rubbers (tin-modified BR) obtained by modification with tin compounds. These may be used alone or in combinations of two or more. Rare earth-catalyzed BR is preferred among these.

Rare earth-catalyzed BR refers to polybutadiene rubbers synthesized using rare earth catalysts and characterized by having a high cis content and a low vinyl content. The rare earth-catalyzed BR may be one generally used in tire manufacture.

Known rare earth catalysts may be used. Examples include catalysts containing lanthanide rare earth compounds, organoaluminum compounds, aluminoxanes, or halogen-containing compounds, optionally with Lewis bases. Neodymium (Nd) catalysts using Nd-containing compounds as lanthanide rare earth compounds are particularly preferred among these.

The cis content of the BR is preferably 90% by mass or higher, more preferably 93% by mass or higher, still more preferably 95% by mass or higher. When the cis content is not lower than the lower limit, the advantageous effect can be more suitably achieved.

The vinyl content of the BR is preferably 1.8% by mass or lower, more preferably 1.0% by mass or lower, still more preferably 0.5% by mass or lower, particularly preferably 0.3% by mass or lower. When the vinyl content is not higher than the upper limit, the advantageous effect can be more suitably achieved.

The BR may be either unmodified or modified BR.

Examples of the modified BR include modified BR in which the above-listed functional groups are introduced. Preferred embodiments are as described for the modified SBR.

The BR may be commercially available from Ube Industries, Ltd., JSR Corporation, Asahi Kasei Corporation, Zeon Corporation, etc.

The amount of BR based on 100% by mass of the rubber component is preferably 5% by mass or more, more preferably 10% by mass or more, but is preferably 60% by mass or less, more preferably 50% by mass or less, still more preferably 30% by mass or less. When the amount is within the range indicated above, the advantageous effect tends to be more suitably achieved.

Examples of the isoprene-based rubbers include natural rubber (NR), polyisoprene rubber (IR), refined NR, modified NR, and modified IR. The NR may be one commonly used in the tire industry such as SIR20, RSS#3, or TSR20. Any IR may be used, and examples include those commonly used in the tire industry such as IR2200. Examples of the refined NR include deproteinized natural rubber (DPNR) and highly purified natural rubber (UPNR). Examples of the modified NR include epoxidized natural rubber (ENR), hydrogenated natural rubber (HNR), and grafted natural rubber. Examples of the modified IR include epoxidized polyisoprene rubber, hydrogenated polyisoprene rubber, and grafted polyisoprene rubber. These may be used alone or in combinations of two or more. Natural rubber is preferred among these.

The combined amount of the SBR and BR based on 100% by mass of the rubber component is preferably 30% by mass or more, more preferably 50% by mass or more, still more preferably 70% by mass or more, particularly preferably 90% by mass or more, most preferably 100% by mass. When the amount is within the range indicated above, the advantageous effect tends to be more suitably achieved.

Herein, the weight average molecular weight (Mw) and number average molecular weight (Mn) may be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

The cis content (cis-1,4-butadiene unit content) and vinyl content (1,2-butadiene unit content) may be determined by infrared absorption spectrometry. The styrene content may be determined by $^1$H-NMR analysis.

The rubber composition preferably contains at least one wax.

Any wax may be used, and examples include petroleum waxes such as paraffin waxes and microcrystalline waxes; naturally-occurring waxes such as plant waxes and animal waxes; and synthetic waxes such as polymers of ethylene, propylene, or other similar monomers. These may be used alone or in combinations of two or more. Petroleum waxes are preferred among these, with paraffin waxes or microcrystalline waxes being more preferred. Also preferred are microcrystalline waxes containing, based on 100% by mass thereof, 50% by mass or more of branched alkanes.

The waxes may be commercially available from Ouchi Shinko Chemical Industrial Co., Ltd., Nippon Seiro Co., Ltd., Seiko Chemical Co., Ltd., etc.

The amount of paraffin waxes per 100 parts by mass of the rubber component is preferably 2.3 parts by mass or less, more preferably 2.0 parts by mass or less, still more preferably 1.5 parts by mass or less, particularly preferably 1.3 parts by mass or less. To improve static ozone resistance, the amount is preferably 0.3 parts by mass or more, more preferably 0.5 parts by mass or more, still more preferably 0.8 parts by mass or more, particularly preferably 1.0 part by mass or more.

The amount of microcrystalline waxes per 100 parts by mass of the rubber component is preferably 0.3 parts

by mass or more, more preferably 0.5 parts by mass or more, still more preferably 0.8 parts by mass or more, to improve grip performance before running-in, while it is preferably 3 parts by mass or less, more preferably 2 parts by mass or less, still more preferably 1.5 parts by mass or less, to improve grip performance after running-in.

The rubber composition contains at least one phenylenediamine antioxidant(p-phenylenediamine antioxidants) such as N-isopropyl-N'-phenyl-p-phenylenediamine, N-(1,3-dimethylbutyl)-N'-phenyl-p-phenylenediamine, N,N'-di-2-naphthyl-p-phenylenediamine, and N,N'-bis(1,4-dimethylpentyl)-p-phenylenediamine.

Other examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. These may be used alone or in combinations of two or more. Phenylenediamine antioxidants are preferred among these, with N-(1,3-dimethylbutyl)-N'-phenyl-p-phenylenediamine or N,N'-bis(1,4-dimethylpentyl)-p-phenylenediamine being more preferred.

Although quinoline antioxidants may be used with phenylenediamine antioxidants, quinoline antioxidants tend to migrate slower than phenylenediamine antioxidants and thus to have a smaller effect in softening the surface layer.

The antioxidants may be commercially available from Seiko Chemical Co., Ltd., Sumitomo Chemical Co., Ltd., Ouchi Shinko Chemical Industrial Co., Ltd., Flexsys, etc.

The amount of phenylenediamine antioxidants per 100 parts by mass of the rubber component is 3.4 parts by mass or more, preferably 4 parts by mass or more, more preferably 5 parts by mass or more, but is preferably 20 parts by mass or less, more preferably 15 parts by mass or less, still more preferably 7 parts by mass or less. When the amount is within the range indicated above, the ratio (a)/(b) and the Martens hardnesses (a) and (b) can be adjusted within the predetermined ranges, and the advantageous effect can be more suitably achieved.

The amount (total amount) of antioxidants per 100 parts by mass of the rubber component is preferably 3 parts by mass or more, more preferably 4 parts by mass or more, still more preferably 6 parts by mass or more, but is preferably 20 parts by mass or less, more preferably 15 parts by mass or less, still more preferably 8 parts by mass or less. When the amount is within the range indicated above, the advantageous effect tends to be better achieved.

The rubber composition contains at least one liquid plasticizer.

Any liquid plasticizer that is liquid at 20°C may be used, and examples include oils, liquid resins, and liquid polymers. These may be used alone or in combinations of two or more. Oils or liquid resins are preferred among these.

The amount of liquid plasticizers per 100 parts by mass of the rubber component is 20 parts by mass or more, preferably 25 parts by mass or more, more preferably 30 parts by mass or more, still more preferably 35 parts by mass or more, but is preferably 100 parts by mass or less, more preferably 80 parts by mass or less, still more preferably 60 parts by mass or less, particularly preferably 50 parts by mass or less. When the amount is within the range indicated above, the ratio (a)/(b) and the Martens hardnesses (a) and (b) can be adjusted within the predetermined ranges, and the advantageous effect can be more suitably achieved. Herein, the amount of liquid plasticizers includes the amount of the oils contained in the oil extended rubbers, if used.

Examples of oils include process oils, plant oils, and mixtures thereof. Examples of the process oils include paraffinic process oils, aromatic process oils, naphthenic process oils, mild extraction solvates (MES), and treated distillate aromatic extracts (TDAE). Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, tung oil, and oleic acid-containing oils. These may be used alone or in combinations of two or more. To achieve the advantageous effect well, process oils are preferred among these, with aromatic process oils or oleic acid-containing oils being preferred.

The oils may be commercially available from Idemitsu Kosan Co., Ltd., Sankyo Yuka Kogyo K.K., Japan Energy Corporation, Olisoy, H&R, Hokoku Corporation, Showa Shell Sekiyu K.K., Fuji Kosan Co., Ltd., etc.

Examples of liquid resins include resins that are liquid at 20°C, such as terpene resins (including terpene phenol resins and aromatic modified terpene resins), styrene resins, C5 resins, C9 resins, C5/C9 resins, dicyclopentadiene (DCPD) resins, coumarone-indene resins (including resins based on coumarone or indene alone), phenol resins, olefin resins, polyurethane resins, and acrylic resins. These may be used alone or in combinations of two or more. Coumarone-indene resins are preferred among these.

Examples of liquid polymers (liquid diene polymers) include liquid polymers that are liquid at 20°C, such as liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers. The chain end or backbone of these polymers may be modified with a polar group. These liquid polymers may be used alone or in combinations of two or more.

The rubber composition preferably contains at least one resin (solid resin: resin that is solid at room temperature (25°C)). In this case, better grip performance tends to be obtained.

The resin preferably has a softening point of 60°C or higher, more preferably 65°C or higher, still more preferably 80°C or higher. The upper limit of the softening point is not limited, but is preferably 160°C or lower, more preferably 135°C or lower. When the softening point is within the range indicated above, the advantageous effect tends to be more suitably achieved.

The softening point of the resin is determined in accordance with JIS K 6220-1:2001 using a ring and ball softening point measuring apparatus and defined as the temperature at which the ball drops down.

Any resin (solid resin) may be used, and examples include aromatic vinyl polymers, coumarone-indene resins, terpene resins, dicyclopentadiene resins (DCPD resins), C5 petroleum resins, C9 petroleum resins, C5/C9 petroleum resins, p-t-butylphenol acetylene resins, and acrylic resins. These may be used alone or in combinations of two or more.

Moreover, these resins may be hydrogenated. Aromatic vinyl polymers or terpene resins are preferred among these.

The aromatic vinyl polymers refer to resins produced by polymerizing α-methylstyrene and/or styrene. Examples include styrene homopolymers (styrene resins), α-methylstyrene homopolymers (α-methylstyrene resins), copolymers of α-methylstyrene and styrene, and copolymers of styrene and other monomers.

Any terpene resin having units derived from a terpene compound may be used. Examples include polyterpenes (resins produced by polymerization of terpene compounds), terpene aromatic resins (resins produced by copolymerization of terpene compounds and aromatic compounds), and aromatic modified terpene resins (resins obtained by modification of terpene resins with aromatic compounds). These may be used alone or in combinations of two or more. Terpene aromatic resins or aromatic modified terpene resins are preferred among these, with aromatic modified terpene resins being more preferred.

The terpene compounds refer to hydrocarbons having a composition represented by $(C_5H_8)_n$ or oxygen-containing derivatives thereof, which have a terpene backbone and are classified into monoterpenes ($C_{10}H_{16}$), sesquiterpenes ($C_{15}H_{24}$), diterpenes ($C_{20}H_{32}$), or other terpenes. Examples include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol. Other examples of the terpene compounds include resin acids (rosin acids) such as abietic acid, neoabietic acid, palustric acid, levopimaric acid, pimaric acid, and isopimaric acid. Thus, the terpene resins include rosin resins mainly containing rosin acids obtained by processing pine resin. Examples of the rosin resins include natural rosin resins (polymerized rosins) such as gum rosins, wood rosins, and tall oil rosins; modified rosin resins such as maleic acid-modified rosin resins and rosin-modified phenol resins; rosin esters such as rosin glycerol esters; and disproportionated rosin resins obtained by disproportionation of rosin resins.

The aromatic compounds may be any compound having an aromatic ring, and examples include phenol compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene and styrene derivatives such as alkylstyrenes, alkoxystyrenes, and unsaturated hydrocarbon group-containing styrenes. Styrene is preferred among these.

The resins and liquid resins may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JXTG Energy Corporation, Arakawa Chemical Industries, Ltd., Taoka Chemical Co., Ltd., etc.

The amount of resins per 100 parts by mass of the rubber component is preferably 5 parts by mass or more, more preferably 7 parts by mass or more, still more preferably 10 parts by mass or more, particularly preferably 20 parts by mass or more, but is preferably 60 parts by mass or less, more preferably 50 parts by mass or less, still more preferably 40 parts by mass or less. When the amount is within the range indicated above, the advantageous effect tends to be better achieved.

The rubber composition preferably contains at least one amide compound and/or at least one nonionic surfactant having an SP value of 9.0 or higher.

Any amide compound may be used, and examples include fatty acid amides and fatty acid amide esters. These may be used alone or in combinations of two or more. Among these, fatty acid amides are preferred, and mixtures of fatty acid amides with fatty acid amide esters are more preferred.

Mixtures of amide compounds with fatty acid metal salts may also be used. Mixtures of amide compounds with fatty acid metal salts are preferred in order to more suitably achieve the advantageous effect.

Examples of the metals of the fatty acid metal salts include potassium, sodium, magnesium, calcium, barium, zinc, nickel, and molybdenum. These may be used alone or in combinations of two or more. Alkaline earth metals such as calcium and zinc are preferred among these, with calcium being more preferred.

The fatty acids of the fatty acid metal salts may be saturated or unsaturated fatty acid. Examples of the saturated fatty acids include decanoic acid, dodecanoic acid, and stearic acid. Examples of the unsaturated fatty acids include oleic acid and elaidic acid. These may be used alone or in combinations of two or more. Saturated fatty acids are preferred, with stearic acid being more preferred. Among the unsaturated fatty acids, oleic acid is preferred.

The fatty acid amides may be saturated or unsaturated fatty acid amides. Examples of the saturated fatty acid amides include stearamide and behenamide. Examples of the unsaturated fatty acid amides include oleamide and erucamide. These may be used alone or in combinations of two or more. Unsaturated fatty acid amides are preferred among these, with oleamide being more preferred.

The fatty acid amide esters may be saturated or unsaturated fatty acid amide esters. Examples of the saturated fatty acid amide esters include stearic acid amide esters and behenic acid amide esters. Examples of the unsaturated fatty acid amide esters include oleic acid amide esters and erucic acid amide esters. These may be used alone or in combinations of two or more. Unsaturated fatty acid amide esters are preferred among these, with oleic acid amide esters being more preferred.

The amide compounds may be commercially available from NOF Corporation, Struktol, Lanxess, etc.

The amount of amide compounds per 100 parts by mass of the rubber component is preferably 0.1 parts by mass or more, more preferably 0.5 parts by mass or more, still more preferably 0.8 parts by mass or more, but is preferably 5 parts by mass or less, more preferably 4 parts by mass or less, still more preferably 3 parts by mass or less, particularly preferably 2 parts by mass or less. When the amount is within the range indicated above, the ratio (a)/(b) and the Martens hardnesses (a) and (b) can be adjusted within the predetermined ranges, and the advantageous effect can be more suitably achieved. Herein, the amount of amide compounds, when in the form of mixtures with fatty acid metal salts, includes the amount of the fatty acid metal salts contained in the amide compounds.

Any nonionic surfactant having an SP value of 9.0 or higher may be used, and examples include nonionic surfactants represented by the formula (1) below and/or by the formula (2) below; Pluronic-type nonionic surfactants; sorbitan fatty acid esters such as polyoxyethylene sorbitan monostearate, polyoxyethylene sorbitan monooleate, polyoxyethylene sorbitan monopalmitate, polyoxyethylene sorbitan trioleate, polyoxyethylene sorbitan tristearate, and polyoxyethylene sorbitan tripalmitate; and polyoxyethylene alkyl ethers such as polyoxyethylene dodecyl ether, polyoxyethylene lauryl ether, polyoxyethylene 2-ethylhexyl ether, polyoxyethylene oleyl ether, ethylene glycol dibutyl ether, ethylene glycol dilauryl ether, ethylene glycol di-2-ethylhexyl ether, and ethylene glycol dioleyl ether. These nonionic surfactants may be used alone or in combinations of two or more. To more suitably achieve the advantageous effect, Pluronic-type nonionic surfactants are more preferred among these.

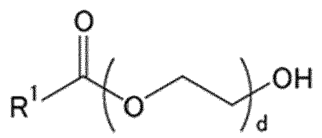

(1)

In formula (1), $R^1$ represents a C6-C26 hydrocarbon group, and d represents an integer.

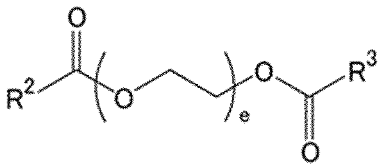

(2)

In formula (2), $R^2$ and $R^3$ are the same or different and each represent a C6-C26 hydrocarbon group, and e represents an integer.

Examples of the nonionic surfactants of formula (1) include ethylene glycol monooleate, ethylene glycol monopalmeate, ethylene glycol monopalmitate, ethylene glycol monovaccenate, ethylene glycol monolinoleate, ethylene glycol monolinolenate, ethylene glycol monoarachidonate, ethylene glycol monostearate, ethylene glycol monocetylate, and ethylene glycol monolaurate.

Examples of the nonionic surfactants of formula (2) include ethylene glycol dioleate, ethylene glycol dipalmeate, ethylene glycol dipalmitate, ethylene glycol divaccenate, ethylene glycol dilinoleate, ethylene glycol dilinolenate, ethylene glycol diarachidonate, ethylene glycol distearate, ethylene glycol dicetylate, and ethylene glycol dilaurate.

The Pluronic-type nonionic surfactants are also called polyoxyethylene polyoxypropylene glycols, polyoxyethylene polyoxypropylene block polymers, or polypropylene glycol ethylene oxide adducts, generally represented by the formula (I) below. As shown in formula (I), the Pluronic-type nonionic surfactants contain on both sides thereof a hydrophilic group having an ethylene oxide structure, and also contain a hydrophobic group having a propylene oxide structure between the hydrophilic groups.

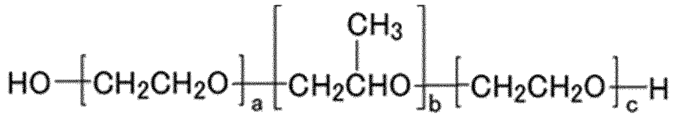 (I)

In formula (I), a, b, and c represent integers.

The degree of polymerization of the polypropylene oxide block (b in formula (I)) and the number of polyethylene oxide units added (a+c in formula (I)) of the Pluronic-type nonionic surfactants are not limited, and may be chosen appropriately according to the service conditions, purpose, or other factors. A surfactant with a higher proportion of the polypropylene oxide block tends to have higher affinity for rubber and thus to migrate to the rubber surface at a slower rate. In particular, to suitably control blooming of the nonionic surfactants to more suitably achieve the advantageous effect, the degree of polymerization of the polypropylene oxide block (b in formula (I)) is preferably 100 or less and more preferably 10 to 70, still more preferably 10 to 60, particularly preferably 20 to 60, most preferably 20 to 45. For the same reason, the number of polyethylene oxide units added (a+c in formula (I)) is preferably 100 or less and more preferably 3 to 65, still more preferably 5 to 55, particularly preferably 5 to 40, most preferably 10 to 40. When the degree of polymerization of the polypropylene oxide block and the number of polyethylene oxide units added are within the ranges indicated above, blooming of the nonionic surfactants can be suitably controlled, and the advantageous effect can be more suitably achieved.

Examples of the Pluronic-type nonionic surfactants include Pluronic series available from BASF Japan Ltd., Newpol PE series available from Sanyo Chemical Industries, Ltd., Adeka Pluronic L or F series available from Adeka Corporation, Epan series available from DKS Co. Ltd., and Unilub or Pronon series available from NOF corporation. These may be used alone or in combinations of two or more.

The SP value of the nonionic surfactants is 9.0 or higher, preferably 9.1 or higher, more preferably 9.2 or higher, but is preferably 12 or lower, more preferably 11 or lower, still more preferably 10.5 or lower. When the SP value is within the range indicated above, the advantageous effect can be more suitably achieved.

Herein, the term "SP value" refers to the solubility parameter calculated based on the structure of the compound by a Hoy method described in, for example, K. L. Hoy, "Table of Solubility Parameters", Solvent and Coatings Materials Research and Development Department, Union Carbites Corp. (1985).

The amount of nonionic surfactants having an SP value of 9.0 or higher per 100 parts by mass of the rubber component is preferably 0.1 parts by mass or more, more preferably 0.5 parts by mass or more, still more preferably 0.8 parts by mass or more, but is preferably 5 parts by mass or less, more preferably 3 parts by mass or less, still more preferably 2 parts by mass or less. When the amount is within the range indicated above, the ratio (a)/(b) and the Martens hardnesses (a) and (b) can be adjusted within the predetermined ranges, and more suitable overall grip performance can be obtained without impairing adhesion grip.

The rubber composition may contain at least one silica.

Examples of the silica include dry silica (anhydrous silica) and wet silica (hydrous silica). Wet silica is preferred because it has a large number of silanol groups. These may be used alone or in combinations of two or more.

The nitrogen adsorption specific surface area ($N_2SA$) of the silica is preferably 80 $m^2/g$ or more, more preferably 110 $m^2/g$ or more, but is preferably 300 $m^2/g$ or less, more preferably 280 $m^2/g$ or less, still more preferably 200 $m^2/g$ or less. When the $N_2SA$ is within the range indicated above, the advantageous effect tends to be better achieved.

The $N_2SA$ of the silica is measured by the BET method in accordance with ASTM D3037-81.

The silica may be commercially available from Degussa, Rhodia, Tosoh Silica Corporation, Solvay Japan, Tokuyama Corporation, etc.

The amount of silica per 100 parts by mass of the rubber component is preferably 30 parts by mass or more, more preferably 50 parts by mass or more, still more preferably 70 parts by mass or more, particularly preferably 90 parts by mass or more, but is preferably 200 parts by mass or less, more preferably 160 parts by mass or less, still more preferably 150 parts by mass or less, particularly preferably 130 parts by mass or less. When the amount is within the range indicated above, the advantageous effect tends to be better achieved.

In the rubber composition, the amount of silica based on 100% by mass of fillers (reinforcing fillers) is preferably 60% by mass or more, more preferably 70% by mass or more, still more preferably 80% by mass or more, particularly preferably 90% by mass or more. The upper limit is not limited and may be 100% by mass.

The rubber composition which contains silica preferably further contains at least one silane coupling agent.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilyl-butyl)disulfide, bis(3-trimethoxysilylpropyl)disulfide, bis(2-trimethoxysilylethyl)disulfide, bis(4-trimethoxysilyl-butyl)disulfide, 3-trimethoxysilylpropyl-N,N-dimethylthiocarbamoyltetrasulfide, 2-triethoxy-silylethyl-N,N-dimethylthiocarbamoyltetrasulfide, and

3-triethoxysilylpropyl methacrylate monosulfide; mercapto silane coupling agents such as 3-mercaptopropyltrimethoxysilane and 2-mercaptoethyltriethoxysilane; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxy-silane; and chloro silane coupling agents such as 3-chloropropyltrimethoxysilane and 3-chloropropyltriethoxy-silane. Commercial products available from Degussa, Momentive, Shin-Etsu Silicone, Tokyo Chemical Industry Co., Ltd., AZmax. Co., Dow Corning Toray Co., Ltd., etc. may be used. These may be used alone or in combinations of two or more. Sulfide silane coupling agents are preferred among these because then the advantageous effect tend to be better achieved.

The amount of silane coupling agents per 100 parts by mass of the silica is preferably 3 parts by mass or more, more preferably 5 parts by mass or more, but is preferably 20 parts by mass or less, more preferably 15 parts by mass or less. When the amount is within the range indicated above, the advantageous effect tends to be better achieved.

The rubber composition may contain at least one carbon black as a reinforcing filler.

Any carbon black may be used, and examples include N134, N110, N220, N234, N219, N339, N330, N326, N351, N550, and N762. These may be used alone or in combinations of two or more.

The nitrogen adsorption specific surface area ($N_2SA$) of the carbon black is preferably 80 $m^2/g$ or more, more preferably 100 $m^2/g$ or more, but is preferably 400 $m^2/g$ or less, more preferably 300 $m^2/g$ or less, still more preferably 150 $m^2/g$ or less, particularly preferably 130 $m^2/g$ or less. When the $N_2SA$ is within the range indicated above, the advantageous effect tends to be better achieved.

Herein, the $N_2SA$ of the carbon black is measured in accordance with JIS K6217-2:2001.

The carbon black may be commercially available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc.

The amount of carbon black per 100 parts by mass of the rubber component is preferably 3 parts by mass or more, more preferably 5 parts by mass or more, but is preferably 60 parts by mass or less, more preferably 50 parts by mass or less, still more preferably 40 parts by mass or less, particularly preferably 20 parts by mass or less, most preferably 10 parts by mass or less. When the amount is within the range indicated above, the advantageous effect can be more suitably achieved.

The rubber composition may contain at least one aluminum hydroxide, magnesium sulfate, alumina, magnesium oxide, talc, or diatomaceous earth as a reinforcing filler. In this case, better grip performance tends to be obtained.

The nitrogen adsorption specific surface area ($N_2SA$) of the aluminum hydroxide is preferably 3 to 60 $m^2/g$. The lower limit of the $N_2SA$ is preferably 6 $m^2/g$ or more, more preferably 12 $m^2/g$ or more, while the upper limit is preferably 50 $m^2/g$ or less, more preferably 40 $m^2/g$ or less, still more preferably 20 $m^2/g$ or less. When the $N_2SA$ is within the range indicated above, the advantageous effect tends to be better achieved. The $N_2SA$ of the aluminum hydroxide is measured by the BET method in accordance with ASTM D3037-81.

The amount of aluminum hydroxide per 100 parts by mass of the rubber component is preferably 3 parts by mass or more, more preferably 4 parts by mass or more, but is preferably 60 parts by mass or less, more preferably 50 parts by mass or less, still more preferably 40 parts by mass or less, particularly preferably 20 parts by mass or less, most preferably 15 parts by mass or less. When the amount is within the range indicated above, the advantageous effect tends to be more suitably achieved.

The rubber composition may contain at least one stearic acid.

The stearic acid may be a conventional one, e.g., available from NOF Corporation, Kao Corporation, FUJIFILM Wako Pure Chemical Corporation, or Chiba Fatty Acid Co., Ltd.

The amount of stearic acid per 100 parts by mass of the rubber component is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The rubber composition may contain at least one zinc oxide.

The zinc oxide may be a conventional one, e.g., available from Mitsui Mining & Smelting Co., Ltd., Toho Zinc Co., Ltd., HakusuiTech Co., Ltd., Seido Chemical Industry Co., Ltd., or Sakai Chemical Industry Co., Ltd.

The amount of zinc oxide per 100 parts by mass of the rubber component is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The rubber composition may contain at least one sulfur.

Examples of the sulfur include those commonly used in the rubber industry, such as powdered sulfur, precipitated sulfur, colloidal sulfur, insoluble sulfur, highly dispersible sulfur, and soluble sulfur. These may be used alone or in combinations of two or more.

The sulfur may be commercially available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc.

The amount of sulfur per 100 parts by mass of the rubber component is preferably 0.1 parts by mass or more,

more preferably 0.5 parts by mass or more, but is preferably 10 parts by mass or less, more preferably 5 parts by mass or less, still more preferably 3 parts by mass or less. When the amount is within the range indicated above, the advantageous effect tends to be better achieved.

The rubber composition may contain at least one vulcanization accelerator.

Examples of the vulcanization accelerator include thiazole vulcanization accelerators such as 2-mercaptobenzothiazole, di-2-benzothiazolyldisulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. To more suitably achieve the advantageous effect, sulfenamide and/or guanidiene vulcanization accelerators are preferred among these, with combinations of sulfenamide and guanidine vulcanization accelerators being more preferred.

The vulcanization accelerators may be commercially available from Kawaguchi Chemical Industry Co., Ltd., Ouchi Shinko Chemical Industrial Co., Ltd., etc.

The amount of vulcanization accelerators per 100 parts by mass of the rubber component is preferably 1 part by mass or more, more preferably 2 parts by mass or more, but is preferably 10 parts by mass or less, more preferably 7 parts by mass or less. When the amount is within the range indicated above, the advantageous effect tends to be better achieved.

In addition to the above-mentioned components, the rubber composition may further contain additives commonly used in the tire industry, including, for example, organic peroxides, and fillers such as calcium carbonate, clay, and mica. The amount of each of the additives per 100 parts by mass of the rubber component is preferably 0.1 to 200 parts by mass.

The rubber composition may be prepared, for example, by kneading the components in a rubber kneading machine such as an open roll mill or Banbury mixer, and vulcanizing the kneaded mixture as needed.

The kneading conditions are as follows: in a base kneading step of kneading additives other than vulcanizing agents and vulcanization accelerators, the kneading temperature is usually 100 to 180°C, preferably 120 to 170°C, while in a final kneading step of kneading vulcanizing agents and vulcanization accelerators, the kneading temperature is usually 120°C or lower and preferably 80 to 110°C. Then, the composition obtained by kneading vulcanizing agents and vulcanization accelerators is usually vulcanized by press vulcanization, for example. The vulcanization temperature is usually 140 to 190°C, preferably 150 to 185°C, for passenger vehicle tires, and is usually 130 to 160°C, preferably 135 to 155°C, for truck and bus tires. The vulcanization time is usually 5 to 15 minutes for passenger vehicle tires, and is usually 25 to 60 minutes for truck and bus tires.

The rubber composition is for use in a tread of a tire. For use in a tread including a cap tread and a base tread, the rubber composition may be suitably used in the cap tread.

The tires (pneumatic tires, etc.) of the present invention may be produced from the above-described rubber compositions by usual methods. Specifically, the unvulcanized rubber composition may be extruded into the shape of a tire component such as a tread and then assembled with other tire components in a tire building machine in a usual manner to build an unvulcanized tire, which may then be heated and pressurized in a vulcanizer to produce a tire.

Here, the tread of the tire at least partially includes the rubber composition. The entire tread may include the rubber composition. In other words, the tread rubber is at least partially formed from the rubber composition, and the entire tread rubber may be formed from the rubber composition.

The thickness of the tread rubber in the tire radial direction is 5 to 12 mm for passenger vehicle tires and 7 to 25 mm for truck and bus tires. The present application focuses on the physical properties of the surface layer within a depth of 1 mm and thus can be applied to any application.

The tires may be suitably used as tires for passenger vehicles, large passenger vehicles, large SUVs, trucks and buses, or two-wheeled vehicles, or as racing tires, studless winter tires (winter tires), all-season tires, run-flat tires, aircraft tires, mining tires, etc.

(Second Aspect of Invention)

Shore (A) Hs (Shore A hardness) conventionally used in the field of tire technology is measured at an indentation needle length of about 2 mm and also correlates with rubber tests and tensile properties, and therefore is commonly used as an indicator of tire handling performance. However, studies by the present inventors have revealed that Hs may not correlate with grip performance (in particular, initial grip performance). Thus, there was no conventional technique for evaluating grip performance (in particular, initial grip performance).

The second aspect of the present invention solves this problem and relates to methods for evaluating tire grip performance based on the above-mentioned findings.

Specifically, the methods for evaluating tire grip performance according to the second aspect of the invention

include:

preparing a specimen cut out of a tire tread rubber, the specimen having a ground contact face that formed a tire tread contact portion, and a measurement face that is perpendicular to the ground contact face and extends in the tire radial direction; and
measuring the Martens hardness of the measurement face of the specimen prepared in the specimen preparation step along the tire radial direction using a microhardness tester or a thin film hardness tester.

<Specimen preparation step>

In the specimen preparation step, a rubber piece may be cut out of a tire tread rubber, as shown in Figs. 4. The cutting is carried out so that a ground contact face (tread face 20 in Figs. 4) that formed a tire tread contact portion is left in the rubber piece. Then, the cut rubber piece may be used to prepare a specimen shaped to have the ground contact face (tread face 20 in Figs. 4) that formed a tire tread contact portion, and a measurement face that is perpendicular to the ground contact face and extends in the tire radial direction (see Figs. 4). With regard to the measurement face of the specimen, there are a total of four possible faces, including two faces shown in Figs. 4 (measurement faces 30 in Figs. 4) and two faces not shown in the figure, i.e., the hidden back sides, and any of these faces may be used as the measurement face.
Here, the rubber piece may be cut out of any part of the tire as long as the cut rubber piece has the tread face 20, as shown in Figs. 4 (a) to (c). The rubber piece may be cut out along the tire circumferential direction or at an angle different from the tire circumferential direction.
The measurement face may be formed by cutting out the rubber piece as shown in Figs. 4, or by further processing the cut rubber piece.

<Measurement step>

In the measurement step, the Martens hardness of the measurement face of the specimen prepared in the specimen preparation step may be measured along the tire radial direction using a microhardness tester or a thin film hardness tester.
Here, the Martens hardness may be measured at any interval. It is preferably measured at intervals of 20 um because then both efficiency and accuracy can be provided.
Any microhardness tester may be used, and examples include indenter microhardness testers, TI-950 Triboindenter available from Hysitron, Picodentor HM500 available from Fischer, DUH-W201S dynamic ultra micro hardness tester available from Shimadzu Corporation, HM-2000 available from Fischer Instruments, and Fischerscope H100 available from Fischer Instruments.
Any thin film hardness tester may be used, and examples include Martens hardness testers, ENT-2100 nanoindenter available from Elionix Inc., and MHA-400 thin film hardness tester available from NEC Corporation. Thin film hardness testers are preferred among these.
The Martens hardness may be measured in any region, but preferably in a region of the measurement face corresponding to 10 um to 200 um (preferably 20 um to 200 um) deep in the tire radial direction from the tire surface. In this case, grip performance can be efficiently evaluated.
The surface roughness (um) of the measurement face is preferably 2 or less, more preferably 1 or less, still more preferably 0.5 or less, while the lower limit is not limited. In this case, grip performance can be more suitably evaluated.
Herein, the term "surface roughness" refers to the center line surface roughness Ra defined in JIS B0601-2001.
The load applied to the indenter is preferably 30 mgf or more, more preferably 50 mgf or more, but is preferably 200 mgf or less, more preferably 100 mgf or less. In this case, grip performance can be more suitably evaluated.
The indentation depth of the indenter may be appropriately controlled, but is preferably 10 um or less, more preferably 8 um or less, but preferably 2 um or more, more preferably 5 um or more. In this case, grip performance can be more suitably evaluated.
Here, in order to reduce the oxidation effect of the air on the measurement face, it is preferred, before measuring the Martens hardness, to remove the surface of the measurement face of the specimen prepared in the specimen preparation step to a depth of 20 um or more (preferably 200 um or more, more preferably 500 um or more, with no limitation on the upper limit) to form a new measurement face, and measure the Martens hardness of the new measurement face. In this case, grip performance can be more suitably evaluated.
Moreover, in order to reduce the oxidation effect of the air on the measurement face, the Martens hardness is preferably measured within six hours from the formation of the measurement face to be actually measured.

<Evaluation step>

In the evaluation step, grip performance may be evaluated based on the Martens hardness distribution determined in the measurement step. Specifically, grip performance (in particular, grip performance both before and after running-in) may be evaluated based on whether relationship (I) is satisfied or not by the minimum (a) and maximum (b) Martens hardnesses in a region from 10 um to 200 um deep in the tire radial direction from the tire surface.

As described above, the methods for evaluating tire grip performance according to the second aspect of the invention include: preparing a specimen cut out of a tire tread rubber, wherein the specimen has a ground contact face that formed a tire tread contact portion, and a measurement face that is perpendicular to the ground contact face and extends in the tire radial direction; and measuring the Martens hardness of the measurement face of the specimen prepared in the specimen preparation step along the tire radial direction using a microhardness tester or a thin film hardness tester. Thus, the methods can evaluate tire grip performance (in particular, grip performance both before and after running-in).

EXAMPLES

The aspects of the present invention are specifically described below with reference to, but not limited to, examples.

The chemicals used in the examples and comparative examples are listed below.

<SBR 1>: N9548 (styrene content: 35% by mass, vinyl content: 18% by mass, oil content of 37.5 parts by mass per 100 parts by mass of rubber solids) available from Zeon Corporation
<SBR 2>: NS612 (styrene content: 15% by mass, vinyl content: 30% by mass) available from Zeon Corporation
<BR>: BUNA-CB25 (rare earth-catalyzed BR synthesized using Nd catalyst, vinyl content: 0.7% by mass, cis content: 97% by mass, SP value: 8.2) available from Lanxess
<Carbon black>: SHOBLACK N220 ($N_2SA$: 114 $m^2/g$) available from Cabot Japan K.K.
<Silica 1>: ULTRASIL VN3 ($N_2SA$: 175 $m^2/g$) available from Evonik Degussa
<Silica 2>: Z115Gr ($N_2SA$: 115 $m^2/g$) available from Rhodia
<Aluminum hydroxide>: Apyral 200 ($N_2SA$: 15 $m^2/g$) available from Nabaltec
<Silane coupling agent>: Si75 (bis(3-triethoxysilyl-propyldisulfide)) available from Evonik Degussa
<$\alpha$-Methylstyrene resin>: SYLVARES SA85 (copolymer of $\alpha$-methylstyrene and styrene, softening point: 85°C) available from Arizona chemical
<Terpenic resin>: YS resin TO125 (aromatic modified terpene resin, softening point: 125°C) available from Yasuhara Chemical Co., Ltd.
<Aromatic oil>: AH-24 (aromatic process oil) available from Idemitsu Kosan Co., Ltd.
<Liquid coumarone-indene resin>: NOVARES C10 (liquid coumarone-indene resin, softening point: 10°C) available from Rutgers Chemicals
<Surfactant>: NEWPOL PE-64 (Pluronic-type nonionic surfactant, PEG/PPG-25/30 copolymer, formula (I) where a+c = 25 and b = 30, SP value: 9.2) available from Sanyo Chemical Industries, Ltd.
<WB16>: WB16 (mixture of fatty acid calcium salt, fatty acid amide, and fatty acid amide ester, ash content: 4.5%) available from Struktol
<Stearic acid>: stearic acid beads "TSUBAKI" available from NOF Corporation
<Antioxidant 1>: Antigene 6C (6PPD, N-(1,3-dimethylbutyl)-N'-phenyl-p-phenylenediamine) available from Sumitomo Chemical Co., Ltd.
<Antioxidant 2>: Vulkanox 4030 (77PD, N,N'-bis-(1,4-dimethylpentyl)-p-phenylenediamine) available from Lanxess
<Antioxidant 3>: NOCRAC 224 (TMQ, 2,2,4-trimethyl-1,2-dihydroquinoline polymer) available from Ouchi Shinko Chemical Industrial Co., Ltd.
<Paraffin wax>: Ozoace 0355 available from Nippon Seiro Co., Ltd.
<Microcrystalline wax>: Hi-Mic 1080 (branched alkane content based on 100% by mass of microcrystalline wax: 50.6% by mass) available from Nippon Seiro Co., Ltd.
<Zinc oxide>: zinc oxide #2 available from HakusuiTech Co., Ltd.
<Sulfur>: HK200-5 (5% oil-containing powdered sulfur) available from Hosoi Chemical Industry Co., Ltd.
<Vulcanization accelerator 1>: NOCCELER NS (N-tert-butyl-2-benzothiazolylsulfenamide) available from Ouchi Shinko Chemical Industrial Co., Ltd.
<Vulcanization accelerator 2>: NOCCELER D (diphenylguanidine) available from Ouchi Shinko Chemical Industrial Co., Ltd.

(Examples and Comparative Examples)

According to each formulation shown in Table 2, the chemicals other than the sulfur and vulcanization accelerators were kneaded using a 1.7 L Banbury mixer (Kobe Steel, Ltd.) at 150°C for five minutes to give a kneaded mixture. Then, the kneaded mixture was kneaded with the sulfur and vulcanization accelerators in an open roll mill at 80°C for five minutes to give an unvulcanized rubber composition.
The unvulcanized rubber composition was formed into the shape of a cap tread and assembled with other tire components to build an unvulcanized tire. The unvulcanized tire was press-vulcanized at 170°C for 10 minutes to obtain a tire (size: 225/50R17, thickness of tread rubber in tire radial direction: 9 mm).
For the simulation of new tires on the market, the tire was left in a warehouse at an air temperature of 20 to 40°C for three months and then used as a test tire.
The test tires prepared as above were evaluated as described below. Table 2 shows the results.

(Martens hardness)

A rubber piece was cut out of the tread rubber of the test tire. The cutting was carried out so that a ground contact face that had formed a tire tread contact portion was left in the rubber piece. Then, the cut rubber piece was used to prepare a specimen shaped to have the ground contact face that had formed a tire tread contact portion, and a measurement face that was perpendicular to the ground contact face and extended in the tire radial direction (see Figs. 4).
Further, in order to reduce the oxidation effect of the air, the surface of the measurement face of the specimen was removed to a depth of 500 μm to form a new measurement face immediately before (one hour before) the measurement. Then, the Martens hardness was measured along the tire radial direction in a region of the new measurement face corresponding to 10 um to 200 um deep in the tire radial direction from the tire surface. Then, the minimum (a) and maximum (b) Martens hardnesses in a region from 10 um to 200 μm deep in the tire radial direction from the tire surface were determined.
The Martens hardnesses were measured as follows.
The measurement was carried out using ENT-2100 nanoindenter (thin film hardness tester) available from Elionix Inc.
The measurement conditions are as follows.

Temperature: 23°C
Thickness of specimen (thickness in indentation direction of Berkovich indenter): 2 mm
Surface roughness of measurement face: 0.2
Load F: 50 mgf
Angle $\alpha$ of Berkovich indenter: 65.03°
Material of Berkovich indenter: iron coated with DLC (diamond-like carbon)
Indentation depth h: 7 um

An area As(h) (surface area of indenter at depth h (projected contact area between indenter and specimen)) is calculated based on the indentation depth h and the angle $\alpha$ of the indenter using the following equation:

$$As(h) = 3 \times 3^{1/2} \times \tan\alpha/\cos\alpha \times h^2.$$

A Martens hardness is calculated based on the load F (maximum test load) applied to the indenter and the area As(h) using the following equation:

$$\text{Martens hardness} = F/As(h).$$

(Grip performance (wet grip performance) before running-in)

A set of the test tires was mounted on each wheel of a car (2500 cc, 4WD, made in Japan). A driver drove the car on wet asphalt and subjectively evaluated grip, response, deceleration upon braking, and circuit trace performance. The results are expressed as an index (index of grip performance before running-in) relative to Comparative Example 1 (= 100). A higher index indicates better grip performance (wet grip performance) before running-in.

(Grip performance (wet grip performance) after running-in)

After the evaluation of grip performance (wet grip performance) before running-in, the driver further drove the car about 70 km for 0.5 hours on the circuit so that the tread face was worn to a depth of about 10 um. Thereafter, the driver made a subjective evaluation as in the evaluation of grip performance (wet grip performance) before running-in.

The results are expressed as an index (index of grip performance after running-in) relative to Comparative Example 1 (= 100). A higher index indicates better grip performance (wet grip performance) after running-in.

[Table 2]

| | | | Ex. | Ex. | Ex. | Ex. | Ex. | Ex. | Ex. | Ex. | Ex. | Ex. | Ex. | Ex. | Ex. | Comp. Ex. | Comp. Ex. | Comp. Ex. |
|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 1 | 2 | 3 |
| Amount (parts by mass) | Rubber component | SBR 1 | 41.25 | 41.25 | 41.25 | 41.25 | 41.25 | 41.25 | 41.25 | 41.25 | 41.25 | 41.25 | 41.25 | 41.25 | 41.25 | 41.25 | 41.25 | 41.25 |
| | | SBR 2 | 50 | 50 | 50 | 50 | 50 | 50 | 50 | 50 | 50 | 50 | 50 | 50 | 50 | 50 | 50 | 50 |
| | | BR | 20 | 20 | 20 | 20 | 20 | 20 | 20 | 20 | 20 | 20 | 20 | 20 | 20 | 20 | 20 | 20 |
| | Filler | Carbon black | 5 | 5 | 5 | 5 | 5 | 5 | 5 | 5 | 5 | 5 | 5 | 5 | 5 | 5 | 5 | 5 |
| | | Silica 1 | 100 | 100 | 100 | 100 | 100 | 100 | 100 | 100 | 100 | 100 | 100 | 98 | 95 | 100 | 100 | 100 |
| | | Silica 2 | | | | | | | | | | 20 | 20 | | | | | |
| | | Aluminum hydroxide | | | | | | | | | | | | 5 | | | | |
| | | Silane coupling agent | 8 | 8 | 8 | 8 | 8 | 8 | 8 | 8 | 8 | 9.6 | 9.6 | 8 | 8 | 8 | 8 | 8 |
| | Grip resin | α-Methylstyrene resin | 10 | 10 | 10 | 10 | 10 | 10 | 10 | 10 | 10 | 10 | 20 | 10 | 10 | 10 | 10 | 10 |
| | | Terpenic resin | | | | 20 | 20 | | | 10 | 10 | 10 | 10 | | | 20 | 20 | 20 |
| | Liquid plasticizer | Aromatic oil | 20 | 20 | | | | 20 | 20 | 10 | 10 | 25 | 20 | 20 | 15 | | | |
| | | Liquid coumarone-indene resin | | | 20 | | | | | | | | | | | | | |
| | Surfactant | Surfactant | | | | | 1.5 | | | | | | | | | | | |
| | | WB16 | | | | 1.5 | | | | | 1.5 | | 1.5 | | | | | |
| | Chemical, Auxiliary agent | Stearic acid | 2 | 2 | 2 | 2 | 2 | 2 | 2 | 2 | 2 | 2 | 2 | 2 | 2 | 2 | 2 | 2 |
| | | Antioxidant 1 | 2.4 | | 2.4 | 2.4 | 2.4 | 3.4 | 6 | 2.4 | 3.4 | 2.4 | 3.4 | 2.4 | 2.4 | 1.5 | 2.4 | 6 |
| | | Antioxidant 2 | | 2.4 | | | | | | | | | | | | | | |
| | | Antioxidant 3 | 1 | 1 | 1 | 1 | 1 | 1 | 1 | 1 | 1 | 1 | 1 | 1 | 1 | 1 | 1 | 1 |
| | | Paraffin wax | 1.2 | 1.2 | 1.2 | 1.2 | 1.2 | 1.2 | 1.2 | 1.2 | 0.5 | 1.2 | 0.5 | 1.2 | 1.2 | 1.2 | 1.2 | 1.2 |
| | | Microcrystalline wax | | | | | | | | | | | | | | | | |
| | | Zinc oxide | 2 | 2 | 2 | 2 | 2 | 2 | 2 | 2 | 2 | 2 | 2 | 2 | 2 | 2 | 2 | 2 |
| | Vulcanizing agent | Sulfur | 1.50 | 1.50 | 1.50 | 1.50 | 1.50 | 1.50 | 1.50 | 1.50 | 1.50 | 1.50 | 1.50 | 1.50 | 1.50 | 1.50 | 1.50 | 1.50 |
| | Vulcanization accelerator | Vulcanization accelerator 1 | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 |
| | | Vulcanization accelerator 2 | 2 | 2 | 2 | 2 | 2 | 2 | 2 | 2 | 2 | 2 | 2 | 2 | 2 | 2 | 2 | 2 |
| | Total PHR | | 268.05 | 268.05 | 268.05 | 269.55 | 269.55 | 269.05 | 271.65 | 268.05 | 269.85 | 304.65 | 311.45 | 271.05 | 258.05 | 267.15 | 268.05 | 271.65 |
| | Total of liquid plasticizers = Total of polymer extender oils + liquid plasticizers | | 31.2 | 31.2 | 31.2 | 11.2 | 11.2 | 31.2 | 31.2 | 21.2 | 21.2 | 36.2 | 41.2 | 41.2 | 26.2 | 11.2 | 11.2 | 11.2 |
| Evaluation result | Martens hardness | Martens hardness (a) [$mgf/\mu m^2$] × $10^{-1}$ (min) | 1.6 | 1.5 | 1.6 | 1.5 | 1.5 | 1.5 | 1.5 | 1.8 | 1.7 | 1.3 | 1.5 | 1.5 | 1.5 | 1.6 | 1.6 | 1.6 |
| | | Martens hardness (b) [$mgf/\mu m^2$] × $10^{-1}$ (max) | 2.0 | 1.9 | 2.1 | 1.9 | 1.9 | 1.8 | 1.6 | 2.3 | 2.0 | 1.4 | 1.6 | 1.8 | 1.8 | 3.2 | 3.0 | 2.6 |
| | | Ratio (a)/(b) | 0.80 | 0.79 | 0.76 | 0.79 | 0.79 | 0.83 | 0.94 | 0.78 | 0.85 | 0.93 | 0.94 | 0.83 | 0.83 | 0.50 | 0.53 | 0.62 |
| | Performance evaluation | Index of grip performance before running-in (Target ≧ 110) | 120 | 122 | 122 | 118 | 120 | 128 | 132 | 114 | 126 | 129 | 135 | 124 | 119 | 100 | 103 | 108 |
| | | Index of grip performance after running-in (Target ≧ 105) | 107 | 105 | 118 | 115 | 113 | 112 | 120 | 114 | 124 | 124 | 132 | 110 | 107 | 100 | 104 | 105 |
| | | Average of indexes of grip performance before and after running-in | 114 | 114 | 120 | 117 | 117 | 120 | 126 | 114 | 125 | 131 | 134 | 117 | 113 | 100 | 104 | 107 |

Ex.: Example

Comp. Ex.: Comparative Example

Table 2 shows that the tires of the examples including a tread rubber satisfying relationship (I) exhibited satisfactory grip performance both before and after running-in.

Table 2 also shows the following.

At a higher phenylenediamine antioxidant content or a lower paraffin wax content, the incorporation of the microcrystalline wax tends to reduce the Martens harness (a) .

At a higher liquid plasticizer content and a higher surfactant content, the phenylenediamine antioxidants tend to be distributed more uniformly over the surface, resulting in a further reduced Martens hardness (a).

At a low liquid plasticizer content, the incorporation of the phenylenediamine antioxidants tends to have a small effect, resulting in an increased Martens hardness (a).

The use of the surfactants, microcrystalline wax, or other additives tends to reduce the Martens hardness (a), even when the liquid plasticizer content is low and the resin content is high.

A higher silica content tends to be accompanied by a higher liquid plasticizer content, resulting in a reduced Martens hardness (a).

Next, the surface of the measurement face of each of the specimens prepared in Comparative Example 1, Example 1, and Example 11 was removed to a depth of 500 μm to form a new measurement face immediately before (one hour before) the measurement. Then, the Martens hardness was measured in a region of the new measurement face corresponding to 20 um to 200 um deep in the tire radial direction from the tire surface, at intervals of 20 um along the tire radial direction from the tire surface. Here, other conditions were as described above. Fig. 1 shows the results.

As shown in Fig. 1, at 20 μm from the tire surface, some examples exhibited significant hardening due to oxygen, ozone, or UV degradation with a significant difference. Such degradation did not proceed at 40 to 60 μm from the tire surface, where the hardness was lower than that at 200 μm from the tire surface. This is presumably because it could be a layer rich in plasticizer and resin components.

Although tires will be worn, it appears that they can always reproduce the same phenomenon as when they are new because the actual contact area with the road surface is 1/10000, and once the running temperature reaches 60°C or higher, the surface layer is degraded, but some components bleed out.

Grip performance (in particular, grip performance both before and after running-in) can be evaluated based on whether relationship (I) is satisfied or not by the minimum (a) and maximum (b) Martens hardnesses in a region from 10 um to 200 um deep in the tire radial direction from the tire surface.

REFERENCE SIGNS LIST

2: tire
4: tread
20: tread face
22: groove
30: measurement face
position a: 10 um deep in tire radial direction from tire surface
position b: 200 um deep in tire radial direction from tire surface

**Claims**

**1.** A tire, comprising a tread rubber,

the tread rubber satisfying the following relationship (I):

$$(a)/(b) \geq 0.75 \quad (I)$$

wherein the symbols (a) and (b) represent minimum and maximum Martens hardnesses, respectively, of a tire tread contact portion measured in a region from 10 um to 200 um deep in a tire radial direction from a tire surface;

wherein the tread rubber is formed from a rubber composition which comprises, per 100 parts by mass of a rubber component therein, 3.4 parts by mass or more of at least one phenylenediamine antioxidant; and
wherein the tread rubber is formed from a rubber composition which comprises, per 100 parts by mass of a rubber component therein, 20 parts by mass or more of at least one liquid plasticizer.

**2.** The tire according to claim 1,
wherein the minimum Martens hardness (a) is 0.35 mgf/$\mu m^2$ or less.

**3.** The tire according to claim 1 or 2,
wherein the maximum Martens hardness (b) is 0.05 mgf/$\mu m^2$ or more.

**4.** The tire according to any one of claims 1 to 3,
wherein the tread rubber is formed from a rubber composition which comprises, per 100 parts by mass of a rubber component therein, 0.1 parts by mass or more of at least one amide compound or at least one nonionic surfactant having an SP value of 9.0 or higher.

**5.** A method for evaluating tire grip performance, comprising:

preparing a specimen cut out of a tire tread rubber, the specimen having a ground contact face that formed a tire tread contact portion, and a measurement face that is perpendicular to the ground contact face and extends in a tire radial direction; and
measuring a Martens hardness of the measurement face of the specimen prepared in the specimen preparation step along the tire radial direction using a microhardness tester or a thin film hardness tester.

**6.** The method for evaluating tire grip performance according to claim 5,
wherein the measurement step comprises measuring the Martens hardness in a region of the measurement face corresponding to 10 um to 200 um deep in the tire radial direction from a tire surface.

**7.** The method for evaluating tire grip performance according to claim 5 or 6,
wherein the method comprises, before measuring the Martens hardness, removing a surface of the measurement face of the specimen prepared in the specimen preparation step to a depth of 20 um or more to form a new measurement face, and measuring the Martens hardness of the new measurement face.

## Patentansprüche

**1.** Reifen, umfassend einen Laufstreifenkautschuk,

wobei der Laufstreifenkautschuk dem folgenden Verhältnis (I) genügt:

$$(a)/(b) \geq 0{,}75 \qquad (I)$$

wobei die Symbole (a) und (b) jeweils minimale und maximale Martenshärten eines Reifenlaufstreifenkontaktabschnitts darstellen, die in einem Bereich von 10 $\mu$m bis 200 $\mu$m tief in einer Reifenradialrichtung von einer Reifenoberfläche aus gemessen sind;
wobei der Laufstreifenkautschuk mit einer Kautschukzusammensetzung gebildet ist, die, pro 100 Massenteile einer Kautschukkomponente darin, 3,4 Massenteile oder mehr mindestens eines Phenylendiamin-Antioxidans umfasst; und
wobei der Laufstreifenkautschuk mit einer Kautschukzusammensetzung gebildet ist, die, pro 100 Massenteile einer Kautschukkomponente darin, 20 Massenteile oder mehr mindestens eines flüssigen Weichmachers umfasst.

**2.** Reifen nach Anspruch 1,
wobei die minimale Martenshärte (a) 0,35 mgf/$\mu m^2$ oder weniger beträgt.

**3.** Reifen nach Anspruch 1 oder 2,
wobei die maximale Martenshärte (b) 0,05 mgf/$\mu m^2$ oder mehr beträgt.

**4.** Reifen nach einem der Ansprüche 1 bis 3, wobei der Laufstreifenkautschuk mit einer Kautschukzusammensetzung gebildet ist, die, pro 100 Massenteile einer Kautschukkomponente darin, 0,1 Massenteile oder mehr mindestens einer Amidverbindung oder mindestens eines nicht-ionischen Tensids mit einem SP-Wert von 9,0 oder höher umfasst.

**5.** Verfahren zur Bewertung von Reifengriffigkeitsleistung, welches umfasst:

Herstellen eines aus einem Reifenlaufstreifenkautschuk ausgeschnittenen Prüfkörpers, wobei der Prüfkörper eine Bodenkontaktfläche, die einen Reifenlaufstreifenkontaktabschnitt bildete, und eine Messfläche, die senkrecht zu der Bodenkontaktfläche ist und sich in einer Reifenradialrichtung erstreckt, aufweist; und
Messen einer Martenshärte der Messfläche des in dem Prüfkörper-Herstellungsschritt hergestellten Prüfkörpers entlang der Reifenradialrichtung unter Verwendung eines Mikrohärteprüfgeräts oder eines Dünnschichthärteprüfgeräts.

**6.** Verfahren zur Bewertung von Reifengriffigkeitsleistung nach Anspruch 5, wobei der Messschritt Messen der Martenshärte in einem Bereich der Messfläche umfasst, der 10 μm bis 200 μm Tiefe in der Reifenradialrichtung von einer Reifenoberfläche aus entspricht.

**7.** Verfahren zur Bewertung von Reifengriffigkeitsleistung nach Anspruch 5 oder 6, wobei das Verfahren, vor dem Messen der Martenshärte, Entfernen einer Oberfläche der Messfläche des im Prüfkörper-Herstellungsschritt hergestellten Prüfkörpers bis zu einer Tiefe von 20 μm oder mehr, um eine neue Messfläche zu bilden, und Messen der Martenshärte der neuen Messfläche umfasst.

## Revendications

**1.** Pneu, comprenant un caoutchouc de bande de roulement,

le caoutchouc de bande de roulement satisfaisant la relation (I) suivante :

$$(a) / (b) \geq 0{,}75 \qquad (I)$$

dans lequel les symboles (a) et (b) représentent les duretés de Martens minimum et maximum, respectivement, d'une partie de contact de bande de roulement de pneu mesurée dans une zone profonde de 10 μm à 200 μm dans une direction radiale de pneu d'une surface de pneu ;
dans lequel le caoutchouc de bande de roulement est formé d'une composition de caoutchouc qui comprend, par 100 parties en masse d'un composant de caoutchouc à l'intérieur, 3,4 parties en masse ou plus d'au moins un antioxydant phénylènediamine ; et
dans lequel le caoutchouc de bande de roulement est formé d'une composition de caoutchouc qui comprend, par 100 parties en masse d'un composant de caoutchouc à l'intérieur, 20 parties en masse ou plus d'au moins un plastifiant liquide.

**2.** Pneu selon la revendication 1, dans lequel la dureté minimum de Martens (a) est de 0,35 mgf/$\mu m^2$ ou moins.

**3.** Pneu selon la revendication 1 ou 2, dans lequel la dureté maximum de Martens (b) est de 0,05 mgf/ $\mu m^2$ ou plus.

**4.** Pneu selon l'une quelconque des revendications 1 à 3, dans lequel le caoutchouc de bande de roulement est formé d'une composition de caoutchouc qui comprend, par 100 parties en masse d'un composant de caoutchouc à l'intérieur, 0,1 partie en masse ou plus d'au moins un composé amide ou d'au moins un tensioactif non ionique ayant une valeur SP de 9,0 ou plus.

**5.** Procédé d'évaluation de la performance d'adhérence d'un pneu, comprenant :

la préparation d'un spécimen découpé d'un caoutchouc de bande de roulement de pneu, le spécimen ayant une face de contact de sol qui formait une partie de contact de bande de roulement de pneu et une face de

mesure qui est perpendiculaire à la face de contact de sol et s'étend dans une direction radiale de pneu ; et la mesure d'une dureté de Martens de la face de mesure du spécimen préparée dans l'étape de préparation de spécimen le long de la direction radiale de pneu en utilisant un testeur de microdureté ou un testeur de dureté de film mince.

**6.** Procédé d'évaluation de la performance d'adhérence d'un pneu selon la revendication 5, l'étape de mesure comprenant la mesure de la dureté de Martens dans une zone de la face de mesure correspondant à une profondeur de 10 μm à 200 μm dans la direction radiale de pneu d'une surface de pneu.

**7.** Procédé d'évaluation de la performance d'adhérence d'un pneu selon la revendication 5 ou 6, dans lequel le procédé comprend, avant la mesure de la dureté de Martens, l'enlèvement d'une surface de la face de mesure du spécimen préparée dans l'étape de préparation de spécimen à une profondeur de 20 μm ou plus pour former une nouvelle face de mesure et la mesure de la dureté de Martens de la nouvelle face de mesure.

FIG. 1

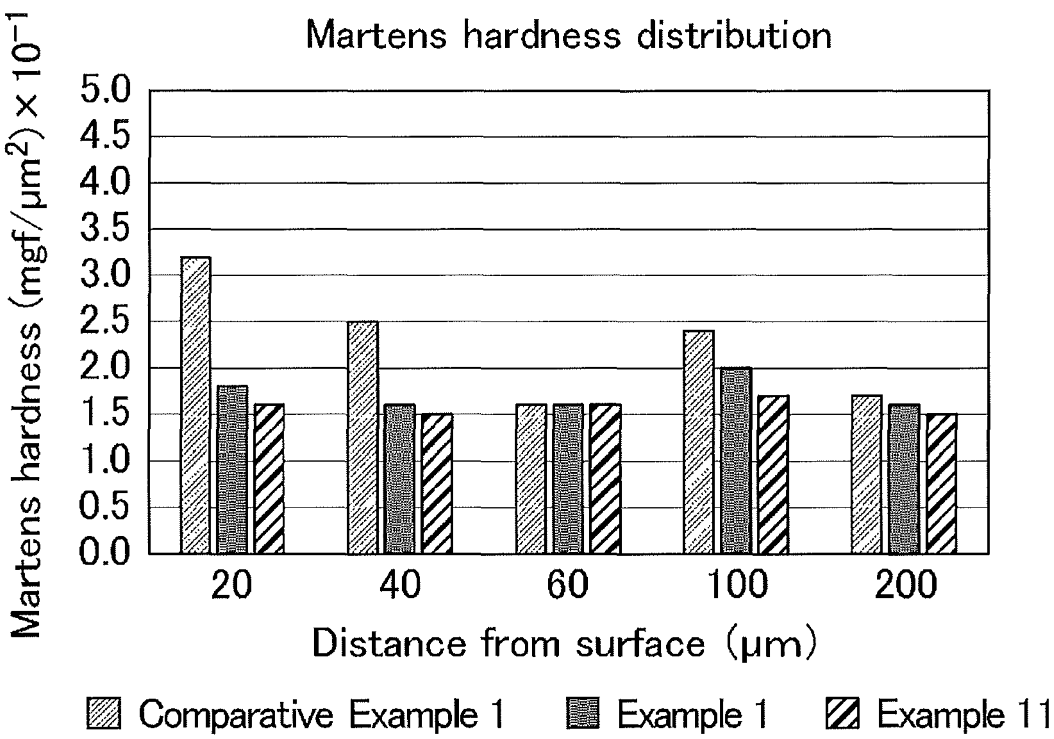
Martens hardness distribution
Martens hardness $(mgf/\mu m^2) \times 10^{-1}$
5.0
4.5
4.0
3.5
3.0
2.5
2.0
1.5
1.0
0.5
0.0
20
40
60
100
200
Distance from surface (μm)
Comparative Example 1
Example 1
Example 11

FIG.2

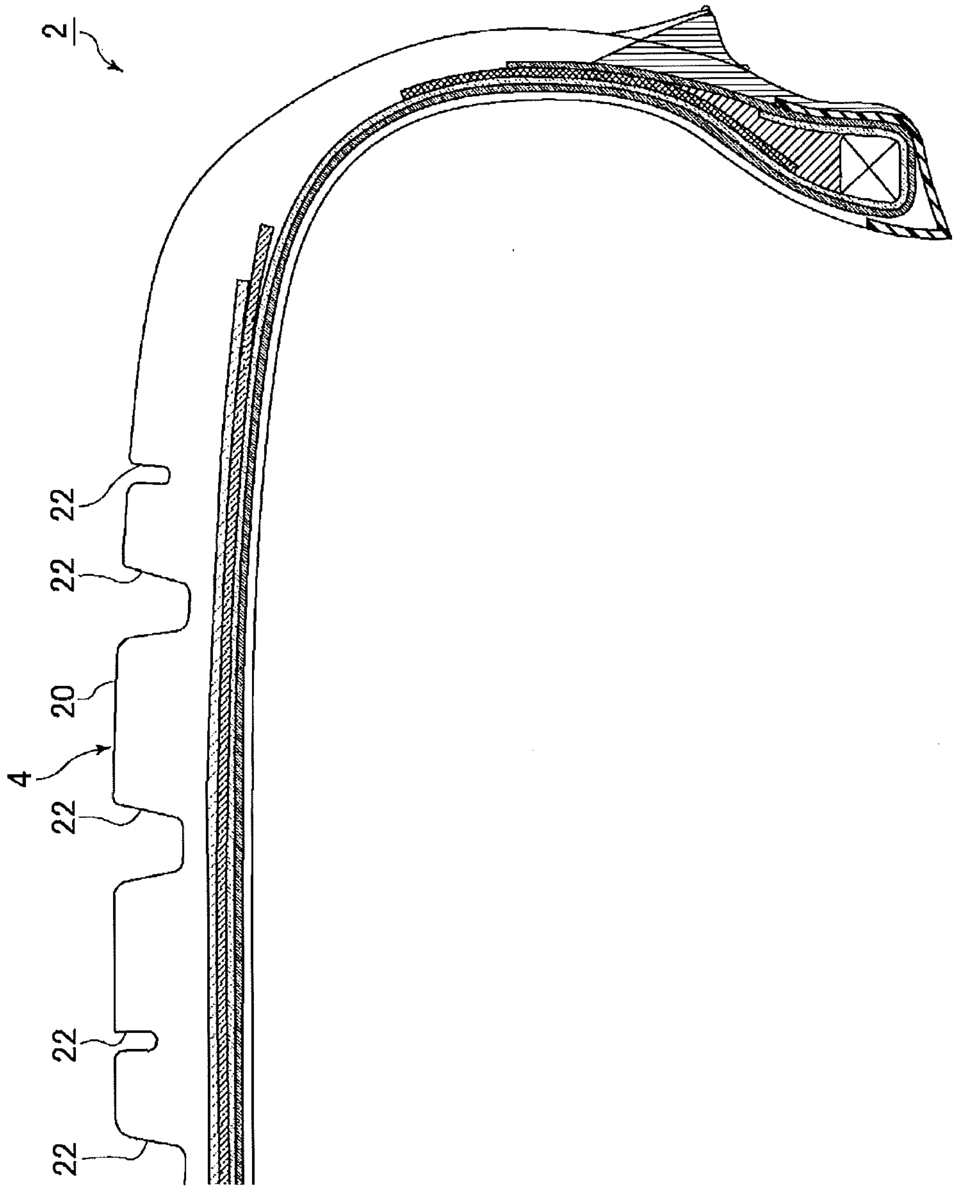
2
22
22
20
4
22
22
22

FIG.3

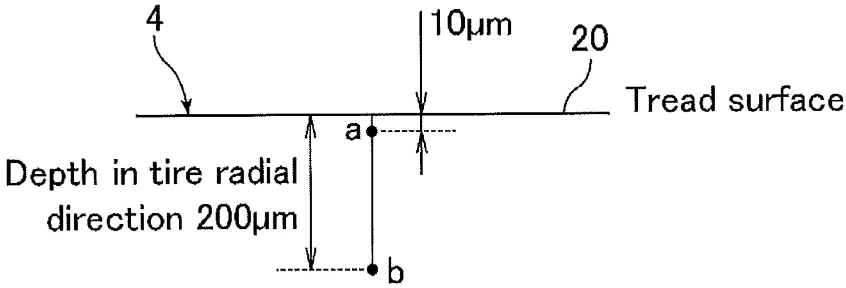
4
10μm
20
Tread surface
a
Depth in tire radial direction 200μm
b

FIGs.4

(a)

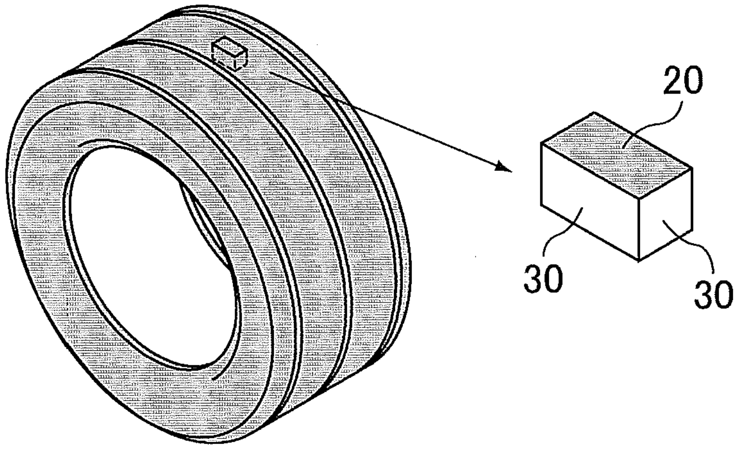


(b)

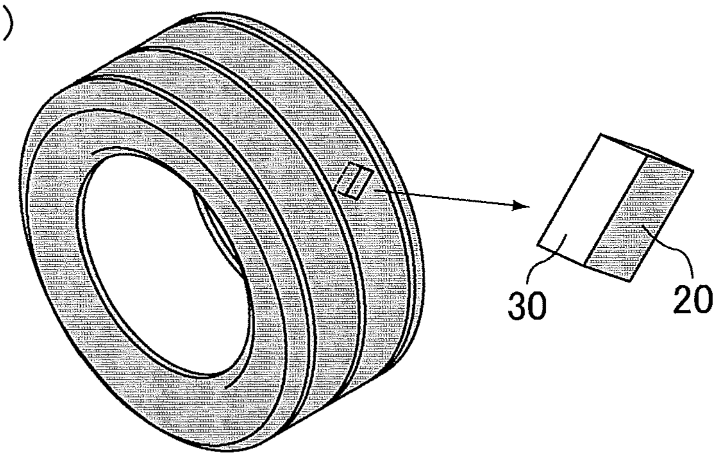


(c)

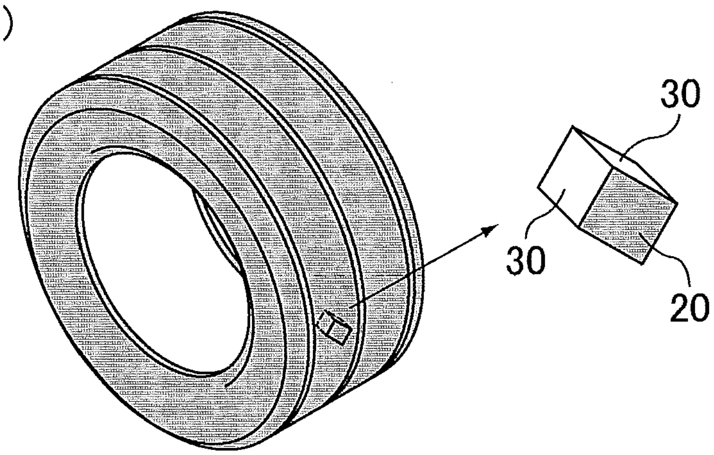

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- JP 2006056979 A

### Non-patent literature cited in the description

- **K. L. HOY.** Table of Solubility Parameters. Solvent and Coatings Materials Research and Development Department, Union Carbites Corp, 1985